# EUROPÄISCHE PATENTSCHRIFT

(11) **EP 2 615 322 B1**
(45) Veröffentlichungstag und Bekanntmachung des Hinweises auf die Patenterteilung: **12.08.2015**
(21) Anmeldenummer: 13150603.2
(22) Anmeldetag: 09.01.2013
(51) Int. Cl.: F16C 33/66, F16C 33/78, F16J 15/16, F16J 15/32

(54) **Dichtungsanordnung**
Seal arrangement
Agencement d'étanchéification

(30) Priorität: 12.01.2012 DE 102012200375
(43) Veröffentlichungstag der Anmeldung: 17.07.2013
(73) Patentinhaber: Aktiebolaget SKF, 41550 Göteborg (SE)
(72) Erfinder: Beck, Jens, 97688 Bad Kissingen (DE)
(74) Vertreter: Schonecke, Mitja

(56) Entgegenhaltungen:
- FR-A1- 2 678 040
- GB-A- 1 098 451
- US-A- 2 177 441
- US-A- 3 072 957
- US-A1- 2010 148 452
- US-B1- 8 292 301

## Beschreibung

Die Erfindung betrifft eine Dichtungsanordnung umfassend einen Dichtungsgrundkörper mit mindestens einer Dichtlippe, wobei die Dichtlippe einen mit einem Schmiermittel zumindest teilweise gefüllten abgedichteten Raum gegen die Umgebung abdichtet und wobei die Dichtlippe reibend an einem Maschinenteil anläuft.

Eine Dichtungsanordnung dieser Art ist im Stand der Technik hinlänglich bekannt. Sie kommt beispielsweise zur Abdichtung eines Wälzlagers zum Einsatz. In diesem Falle kann in den Stirnseiten eines der Lagerringe eine Ringnut zur Aufnahme der Dichtungsanordnung vorgesehen werden. Die Dichtlippe der Dichtungsanordnung, die an einem scheibenförmigen Dichtungsgrundkörper angeordnet ist, liegt dann reibend an einer Lauffläche des Lagerrings an, an dem die Dichtungsanordnung nicht befestigt ist.

Abgedichtete Wälzlager sind mitunter mit einer Lebensdauerschmierung ausgestattet. Demgemäß ist Schmiermittel (Schmierfett) im Lagerinneren angeordnet, das ausreichend ist, um über die zu erwartende Gebrauchsdauer des Lagers zur Verfügung zu stehen. Ein begrenzender Faktor ist hierbei die Fettgebrauchsdauer. Das im Schmierfett enthaltene Grundöl kann sich über die Zeit aus dem Schmierfett absondern und aus dem Lager ausfließen, so dass das Schmierfett dann nicht mehr voll wirksam ist und zu einer entsprechenden Begrenzung der Lagergebrauchsdauer führt.

Die US 2010/0148452 A1 offenbart eine gattungsgemäße Dichtungsanordnung. Hierbei weist eine Dichtlippe der Dichtungsanordnung im Inneren einen abgeschlossenen Raum auf, der mit einem Fluid gefüllt ist. Damit wird es möglich, eine statische Abdichtung zweier Rohrleitungsteile herzustellen und mittels des fluidgefüllten Ringraums über den Umfang der Dichtlippe einen gleichmäßigen Druck auszuüben. Auch die US 8 292 301 B1 offenbart eine gattungsgemäße Dichtungsanordnung, wobei hier ein fluidgefüllter Ringraum in der Dichtlippe vorgesehen ist, um die thermische Leitfähigkeit der Dichtung zu beeinflussen. Weitere Lösungen zeigen die GB 1 098 451 A, die US 3 072 957 A, die US 2 177 441 A und die FR 2 678 040 A1.

Der Erfindung liegt die **Aufgabe** zugrunde, eine Dichtungsanordnung der eingangs genannten Art zu schaffen, mit der es möglich ist, auch bei aus dem Schmierfett und aus der Anwendung austretendem Grundöl zu einer Verlängerung der Gebrauchsdauer der Anwendung, insbesondere eines Wälzlagers, zu gelangen.

Die Lösung dieser Aufgabe durch die Erfindung ist dadurch gekennzeichnet, dass die Dichtlippe einen mit Schmiermittel gefüllten, im Inneren der Dichtlippe angeordneten abgeschlossenen Raum aufweist, wobei dieser Raum durch einen Wandungsbereich der Dichtlippe begrenzt wird, der an dem Maschinenteil anläuft, wobei die Dicke des Wandungsbereichs zwischen 0,1 mm und 2,0 mm beträgt, so dass nach Verschleiß des Wandungsbereichs durch den reibenden Anlauf der Dichtlippe am Maschinenteil das sich im Raum befindliche Schmiermittel freigegeben wird.

Der Raum ist dabei bevorzugt als Ringraum ausgebildet.

Die Dichtlippe besteht bevorzugt aus Elastomermaterial.

Mit der vorgeschlagenen Lösung kann gezielt eingestellt werden, wie lange die Dichtlippe im Gebrauch sein wird, bis der Wandungsbereich durch den reibenden Anlauf verschlissen ist und somit den mit Schmiermittel gefüllten Raum freilegt, wodurch das sich im Raum befindliche Schmiermittel freigegeben wird.

Die Dichtungsanordnung ist bevorzugt Bestandteil eines Lagers, insbesondere eines Wälzlagers, wobei dann das Maschinenteil, an dem die Dichtlippe anläuft, ein Lagerring ist. Die Dichtungsanordnung ist in diesem Falle bevorzugt in einem stirnseitigen Bereich des Lagers angeordnet. Sie kann in einer Ringnut in einem Lagerring des Lagers eingesetzt sein. Das im Raum angeordnete Schmiermittel ist bevorzugt Öl, insbesondere Mineralöl. Das Öl hat dabei bevorzugt eine kinematische Viskosität, die zwischen 50 mm²/s und 200 mm²/s liegt, vorzugsweise zwischen 90 mm²/s und 110 mm²/s. Dies ermöglicht das optimale Ausfließen des Öls aus dem ein Reservoir bildenden Raum.

Erfindungsgemäß wird also eine Verlängerung der Schmierstoffgebrauchsdauer durch Beimischung von Grundöl erreicht, das aus einem Reservoir (Raum) stammt, das in die Dichtung integriert ist. Hiermit ergibt sich insbesondere eine Verlängerung der Lagergebrauchsdauer, wenn die vorgeschlagene Dichtungsanordnung an oder in einem Wälzlager eingesetzt wird. Dies gilt insbesondere bei einem Wälzlager, das beidseitig mit gattungsgemäßen Dichtungsanordnungen ausgestattet sein kann und eine Lebensdauerschmierung aufweist.

Bei einem Lager mit einer berührenden (reibenden) Dichtung ist hiernach also eine definierte Menge an Grundöl in dem besagten Raum eingeschlossen. Durch den Verschleiß des Wandungsbereichs der Dichtlippe wird der Wandungsbereich immer dünner, bis er schließlich durch Abrasion gänzlich verschlissen ist und hierdurch das Grundöl vom Raum (Reservoir) in das Lagerinnere und in das sich hier befindliche Schmierfett eintreten kann.

Das Grundöl kann sich hierbei mit dem Schmierfett im Lagerinneren vermischen und so dem Schmierfett wiederum für eine gewisse Zeit verbesserte Schmiereigenschaften verleihen. Das Schmierfett wird also qualitativ aufgewertet, so dass der Aufbau des tragenden Schmierfilms wieder in verbesserter Weise erfolgen kann.

Der besagte Wandungsbereich der Dichtlippe ist hinsichtlich des Materials und der Dicke so gewählt, dass der zu erwartende Verschleiß gegen das zu erwartende Ende der Gebrauchsdauer des Schmierfetts ausreicht, um den Raum freizulegen. Das Lager kann hierbei seine Dichtigkeit behalten und eine erhöhte Gebrauchsdauer erzielen.

Durch das Einmischen von frischem Grundöl aus dem Raum (Reservoir) in das bereits verbrauchte Schmierfett wird also die Schmierfettgebrauchsdauer und somit auch die Lagergebrauchsdauer vorteilhaft erhöht. Das für den tragenden Schmierfilm benötigte Grundöl wird erneuert bzw. aufgefrischt, so dass eine signifikante Verlängerung der Lagergebrauchsdauer möglich wird.

In der Zeichnung ist ein Ausführungsbeispiel der Erfindung dargestellt. Es zeigen:
- Fig. 1: schematisch im Radialschnitt ein Wälzlager, das mit einer Dichtungsanordnung gemäß einem Ausführungsbeispiel der Erfindung abgedichtet ist, und
- Fig. 2: die Einzelheit "Z" gemäß Fig. 1.

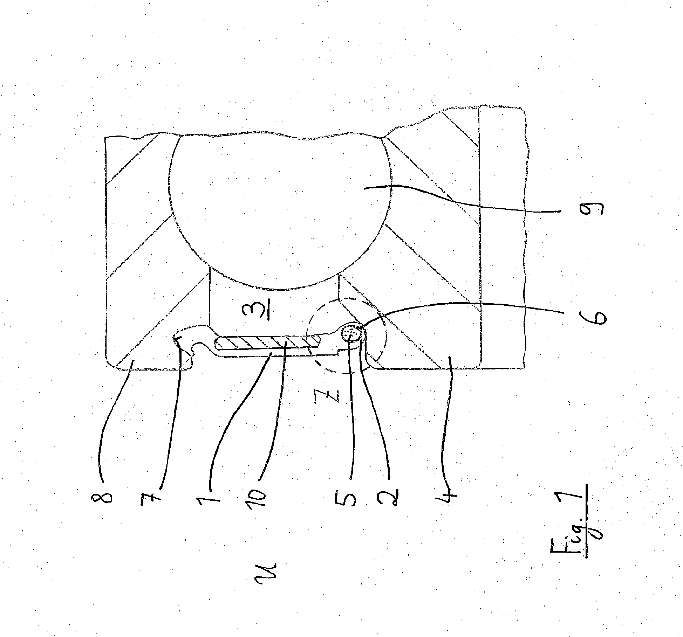

In den Figuren ist ein Wälzlager dargestellt, das einen Lagerinnenring 4 und einen Lageraußenring 8 aufweist, zwischen denen Wälzkörper 9 angeordnet sind. Stirnseitig - dies ist in Fig. 1 aber nur für den linken Bereich des Wälzlagers dargestellt - ist in einer Ringnut 7 im Lageraußenring 8 eine Dichtungsanordnung befestigt, die einen Dichtungsgrundkörper 1 aufweist, der sich radial nach innen erstreckt und an seinem radial innenliegenden Ende eine Dichtlippe 2 trägt.

Die Dichtlippe 2 liegt reibend an einer Anlauffläche des Lagerinnenrings 4 an. Somit wird der Innenraum 3 des Lagers zur Umgebung U hin abgedichtet. Schmierfett, das zwecks Lebensdauerschmierung in den Innenraum eingebracht ist, wird somit wirksam im Lagerinneren zurückgehalten.

Der Dichtungsgrundkörper 1 weist in an sich bekannter Weise ein metallisches Verstärkungs- bzw. Trägerelement 10 auf. An das Element 10 ist elastomeres Material angespritzt, so dass das Element 10 teilweise oder vollständig von diesem Material umgeben ist.

Aus dem Elastomermaterial ist auch die Dichtlippe 2 ausgeformt. Hierbei kommen also bekannte Strukturen der Dichtungstechnik zum Einsatz, was auch für die Wahl des Materials der Dichtlippe 2 gilt.

Die vorgeschlagene Dichtungsanordnung zeichnet sich dadurch aus, dass die Dichtlippe 2 einen mit Schmiermittel gefüllten Raum 5 aufweist, der im Inneren der Dichtlippe 2 angeordnet ist und der zunächst abgeschlossen ist, wenn die Anordnung ihren Betrieb aufnimmt. Der Raum 5 ist als umlaufender Ringraum ausgeführt. Der Raum 5 ist mit einem mineralischen Grundöl gefüllt, das auf das Schmierfett abgestimmt ist, das beim Lager im abgedichteten Raum 3 zum Einsatz kommt.

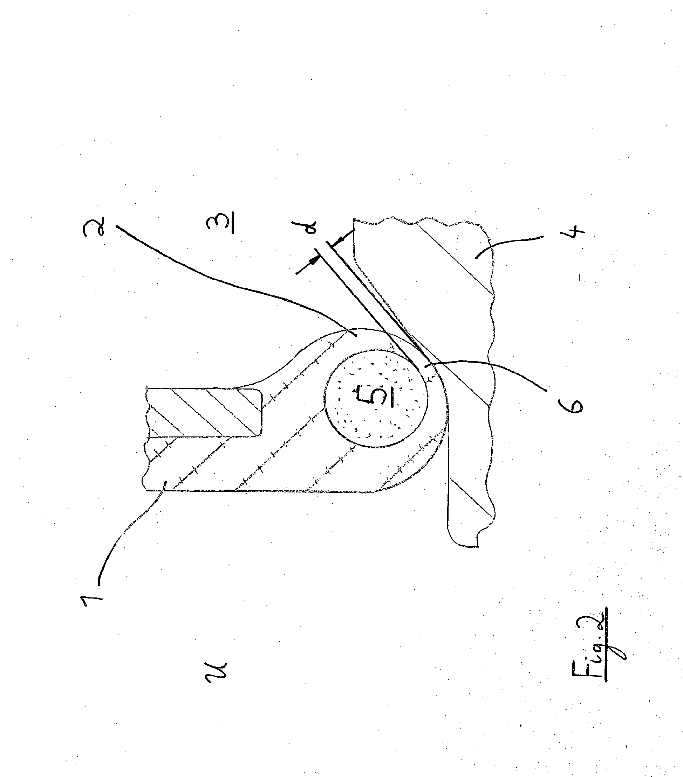

Wie es am besten in Fig. 2 gesehen werden kann, ist dabei die Dichtlippe 2 so ausgebildet, dass ein Wandungsbereich 6 definierter Dicke d zwischen der Anlauffläche am Lagerinnenring 4 und dem Raum 5 vorliegt. Diese Dicke d wird so gewählt, dass nach Erfahrungswerten der Wandungsbereich 6 nach einer bestimmten Gebrauchsdauer des Lagers verschlissen ist.

Ist dieser Punkt erreicht, wird verschleißbedingt der Raum 5 zum Inneren des Lagers hin fluidisch geöffnet, so dass das Grundöl aus dem Raum 5 austreten und sich mit dem Schmierfett vermischen kann, das sich im abgedichteten Raum 3 befindet.

Wie oben erläutert wurde, kann somit die Gebrauchsdauer des Lagers signifikant erhöht werden.

### Bezugszeichenliste

- 1: Dichtungsgrundkörper
- 2: Dichtlippe
- 3: abgedichteter Raum
- 4: Maschinenteil (Lagerinnenring)
- 5: Raum
- 6: Wandungsbereich
- 7: Ringnut
- 8: Lagerring (Lageraußenring)
- 9: Wälzkörper (Kugel)
- 10: Verstärkungs- bzw. Trägerelement

- d: Dicke des Wandungsbereichs
- U: Umgebung

## Patentansprüche

1. Dichtungsanordnung umfassend einen Dichtungsgrundkörper (1) mit mindestens einer Dichtlippe (2), wobei die Dichtlippe (2) einen mit einem Schmiermittel zumindest teilweise gefüllten abgedichteten Raum (3) gegen die Umgebung (U) abdichtet und wobei die Dichtlippe (2) reibend an einem Maschinenteil (4) anläuft,
**dadurch gekennzeichnet,**
**dass** die Dichtlippe (2) einen mit Schmiermittel gefüllten, im Inneren der Dichtlippe (2) angeordneten abgeschlossenen Raum (5) aufweist, wobei dieser Raum (5) durch einen Wandungsbereich (6) der Dichtlippe (2) begrenzt wird, der an dem Maschinenteil (4) anläuft, wobei die Dicke (d) des Wandungsbereichs (6) zwischen 0,1 mm und 2,0 mm beträgt, so dass nach Verschleiß des Wandungsbereichs (6) durch den reibenden Anlauf der Dichtlippe (2) am Maschinenteil (4) das sich im Raum (5) befindliche Schmiermittel freigegeben wird.

2. Dichtungsanordnung nach Anspruch 1, **dadurch gekennzeichnet, dass** der Raum (5) als Ringraum ausgebildet ist.

3. Dichtungsanordnung nach Anspruch 1 oder 2, **dadurch gekennzeichnet, dass** die Dichtlippe (2) aus Elastomermaterial besteht.

4. Dichtungsanordnung nach einem der Ansprüche 1 bis 3, **dadurch gekennzeichnet, dass** sie Bestandteil eines Lagers, insbesondere eines Wälzlagers, ist und das Maschinenteil (4) ein Lagerring ist.

5. Dichtungsanordnung nach Anspruch 4, **dadurch gekennzeichnet, dass** sie in einem stirnseitigen Bereich des Lagers angeordnet ist.

6. Dichtungsanordnung nach Anspruch 5, **dadurch gekennzeichnet, dass** sie in einer Ringnut (7) in einem Lagerring (8) des Lagers eingesetzt ist.

7. Dichtungsanordnung nach einem der Ansprüche 1 bis 6, **dadurch gekennzeichnet, dass** das im Raum (5) angeordnete Schmiermittel Öl ist.

8. Dichtungsanordnung nach Anspruch 7, **dadurch gekennzeichnet, dass** das Öl Mineralöl ist.

9. Dichtungsanordnung nach Anspruch 7 oder 8, **dadurch gekennzeichnet, dass** die kinematische Viskosität des Öls zwischen 50 mm²/s und 200 mm²/s liegt, vorzugsweise zwischen 90 mm²/s und 110 mm²/s.

## Claims

1. Seal arrangement comprising a seal main body (1) with at least one sealing lip (2), the sealing lip (2) sealing with respect to the surroundings (U) a sealed space (3) which is at least partially filled with a lubricant, and the sealing lip (2) running in a rubbing manner on a machine part (4), **characterized in that** the sealing lip (2) has a closed space (5) which is filled with lubricant and is arranged in the interior of the sealing lip (2), the said space (5) being delimited by a wall region (6) of the sealing lip (2), which wall region (6) runs on the machine part (4), the thickness (d) of the wall region (6) being between 0.1 mm and 2.0 mm, with the result that the lubricant which is situated in the space (5) is released after wear of the wall region (6) by way of the rubbing running of the sealing lip (2) on the machine part (4).

2. Seal arrangement according to Claim 1, **characterized in that** the space (5) is configured as an annular space.

3. Seal arrangement according to Claim 1 or 2, **characterized in that** the sealing lip (2) is composed of elastomeric material.

4. Seal arrangement according to one of Claims 1 to 3, **characterized in that** it is a constituent part of a bearing, in particular of an anti-friction bearing, and the machine part (4) is a bearing ring.

5. Seal arrangement according to Claim 4, **characterized in that** it is arranged in a front-side region of the bearing.

6. Seal arrangement according to Claim 5, **characterized in that** it is inserted into an annular groove (7) in a bearing ring (8) of the bearing.

7. Seal arrangement according to one of Claims 1 to 6, **characterized in that** the lubricant which is arranged in the space (5) is oil.

8. Seal arrangement according to Claim 7, **characterized in that** the oil is mineral oil.

9. Seal arrangement according to Claim 7 or 8, **characterized in that** the kinematic viscosity of the oil lies between 50 mm²/s and 200 mm²/s, preferably between 90 mm²/s and 110 mm²/s.

## Revendications

1. Agencement d'étanchéification, comprenant un corps de base d'étanchéification (1) avec au moins une lèvre d'étanchéité (2), la lèvre d'étanchéité (2) étanchéifiant vis-à-vis de l'environnement (U) un espace (3) étanchéifié au moins rempli en partie d'un lubrifiant et la lèvre d'étanchéité (2) s'appliquant par friction contre une partie de machine (4),
**caractérisé en ce que**
la lèvre d'étanchéité (2) présente un espace (5) fermé rempli de lubrifiant et situé à l'intérieur de la lèvre d'étanchéité (2), cet espace (5) étant limité par une région de paroi (6) de la lèvre d'étanchéité (2) qui s'applique contre la partie de machine (4), l'épaisseur (d) de la région de paroi (6) étant comprise entre 0,1 mm et 2,0 mm, de sorte qu'après l'usure de la région de paroi (6) par l'application par friction de la lèvre d'étanchéité (2) contre la partie de machine (4), le lubrifiant se trouvant dans l'espace (5) soit libéré.

2. Agencement d'étanchéification selon la revendication 1, **caractérisé en ce que** l'espace (5) est réalisé sous forme d'espace annulaire.

3. Agencement d'étanchéification selon la revendication 1 ou 2, **caractérisé en ce que** la lèvre d'étanchéité (2) se compose d'un matériau élastomère.

4. Agencement d'étanchéification selon l'une quelconque des revendications 1 à 3, **caractérisé en ce qu'**il fait partie d'un palier, en particulier d'un palier à roulement, et la partie de machine (4) est une bague de palier.

5. Agencement d'étanchéification selon la revendication 4, **caractérisé en ce qu'**il est disposé dans une région frontale du palier.

6. Agencement d'étanchéification selon la revendication 5, **caractérisé en ce qu'**il est inséré dans une rainure annulaire (7) dans une bague de palier (8) du palier.

7. Agencement d'étanchéification selon l'une quelconque des revendications 1 à 6, **caractérisé en ce que** le lubrifiant disposé dans l'espace (5) est de l'huile.

8. Agencement d'étanchéification selon la revendication 7, **caractérisé en ce que** l'huile est de l'huile minérale.

9. Agencement d'étanchéification selon la revendication 7 ou 8, **caractérisé en ce que** la viscosité cinématique de l'huile est comprise entre 50 mm²/s et 200 mm²/s, de préférence entre 90 mm²/s et 110 mm²/s.
